# EUROPEAN PATENT APPLICATION

(11) **EP 4 336 368 A1**
(43) Date of publication of application: **13.03.2024**
(21) Application number: 23189408.0
(22) Date of filing: 03.08.2023
(51) Int. Cl.: G06F 12/02, G06F 12/0804, G06F 12/0866

(54) **SYSTEMS AND METHODS FOR USING A STORAGE DEVICE AS PERSISTENT MEMORY**

(30) Priority: 12.09.2022 US 202263405858 P; 16.11.2022 US 202217988748
(71) Applicant: Samsung Electronics Co., Ltd., Suwon-si, Gyeonggi-do 16677 (KR)
(72) Inventor: JUN, Sang Hun, San Jose, CA 95134 (US); KI, Yang Seok, San Jose, CA 95134 (US)
(74) Representative: Kuhnen & Wacker Patent- und Rechtsanwaltsbüro PartG mbB

(57) **Abstract**

A storage device is disclosed. The storage device may include a volatile storage, a non-volatile storage, and a backup power source configured to provide backup power to the volatile storage. A connector may connect the storage device to a processor. A controller may use the volatile storage as a cache for the non-volatile storage. The controller may copy a data from the volatile storage to the non-volatile storage based at least in part on receiving a signal.

## Description

### FIELD

The disclosure relates generally to storage devices, and more particularly to using storage devices as persistent memory.

### BACKGROUND

Memory requirements for computer systems continue to grow. As more memory is needed, the overall amount spent on memory for computer systems continues to grow, even as memory itself becomes less expensive per unit.

A need remains for to offer increased memory in computer systems.

### SUMMARY

The invention is defined in the appended claims. Embodiments of the disclosure include a storage device. The storage device may include a volatile storage, a non-volatile storage, and a connector for communicating with a processor. Upon receiving a signal from the processor via the connector that data has been flushed to the volatile storage, the storage device may dump the data from volatile storage into the non-volatile storage.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 shows a system including a storage device that may be used to extend memory, according to embodiments of the disclosure.
FIG. 2 shows details of the machine of FIG. 1, according to embodiments of the disclosure.
FIG. 3 shows communications including the processor of FIG. 1 and the storage device of FIG. 1 when power is interrupted, according to embodiments of the disclosure.
FIG. 4 shows details of the storage device of FIG. 1, according to embodiments of the disclosure.
FIG. 5 shows a high level flow of operations involving the processor of FIG. 1 and the storage device of FIG. 1 when power is interrupted, according to embodiments of the disclosure.
FIG. 6 shows a dirty block indicator that may be used by the storage device of FIG. 1, according to embodiments of the disclosure.
FIG. 7 shows a flowchart of an example procedure for the storage device of FIG. 1 to undertake when power is interrupted, according to embodiments of the disclosure.
FIG. 8 shows a flowchart of an example procedure for additional operations the storage device of FIG. 1 may undertake when power is interrupted, according to embodiments of the disclosure.
FIG. 9 shows a flowchart of an example procedure for the storage device of FIG. 1 to receive a signal, according to embodiments of the disclosure.
FIG. 10 shows a flowchart of another example procedure for the storage device of FIG. 1 to undertake when power is interrupted, according to embodiments of the disclosure.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

Applications continue to grow in size, and to use more memory. Even as the cost per unit of memory continues to drop, the increase in demand for memory may drive the overall cost of the system upwards.

There are different varieties of memory. A common memory variety may be Dynamic Random Access Memory (DRAM). DRAM is relatively fast to access, and not very expensive. But to include enough DRAM in a system to meet the memory requirements of applications may be expensive. In addition, DRAM is volatile storage: if power is interrupted for a long enough interval (which may be relatively short from a human perspective), the data in the DRAM may be lost.

Storage devices, such as Solid State Drives (SSDs) are less expensive than DRAM, and therefore may offer larger capacity than DRAM for the same price. But storage devices may be slower to access than DRAM. In addition, the protocols to access storage devices may be different from those to access memory, which may mean that applications might require updates to use storage devices instead of memory.

Cache coherent interconnect storage devices may offer a solution to the concern about updating applications. Cache coherent interconnect storage devices, such as Compute Express Link (CXL) storage devices, may appear to the system as an extension of memory. Applications may issue load and store requests to the system without needing to know that the data is actually be stored on a cache coherent storage device.

Cache coherent interconnect storage devices may operate by including a local volatile storage, such as DRAM, as well as a non-volatile storage, such as flash storage (which may be not-AND (NAND) or not-OR (NOR) flash storage, among other possibilities). The cache coherent interconnect storage device may move data between the internal DRAM and flash storage as needed. When the data is in DRAM, the data is more rapidly accessed; when the data is in flash storage, it is stored for later use (and protected against a power interruption).

But if a power interruption occurs, the data in the DRAM in the cache coherent interconnect storage device may be lost. Cache coherent interconnect storage devices may guard against this risk by including a backup power supply that may provide power to the DRAM long enough to copy the data out of DRAM into the flash storage.

Another problem is that the processor may be caching data that was copied out of DRAM (either from the DRAM in the cache coherent interconnect storage device or from the DRAM in the system). It may be important that this data in the processor cache be stored as well. Upon detecting a power interruption, the processor may dump the data from the cache to DRAM, leaving it to the system to ensure that the data is then stored in some non-volatile storage. But there is no guarantee regarding the timing between when the cache coherent interconnect storage device will dump data from its volatile storage to its non-volatile storage and when the processor flushes data from its cache to DRAM.

Embodiments of the disclosure address this problem by having a platform controller hub-which informs the processor of the need to flush the cache to volatile storage—also send a signal to the cache coherent interconnect storage device. The cache coherent interconnect storage device may wait for this signal before dumping data from its volatile storage to its non-volatile storage. In this manner, the system may ensure that any data in the processor cache is successfully stored in non-volatile storage due to a power interruption.

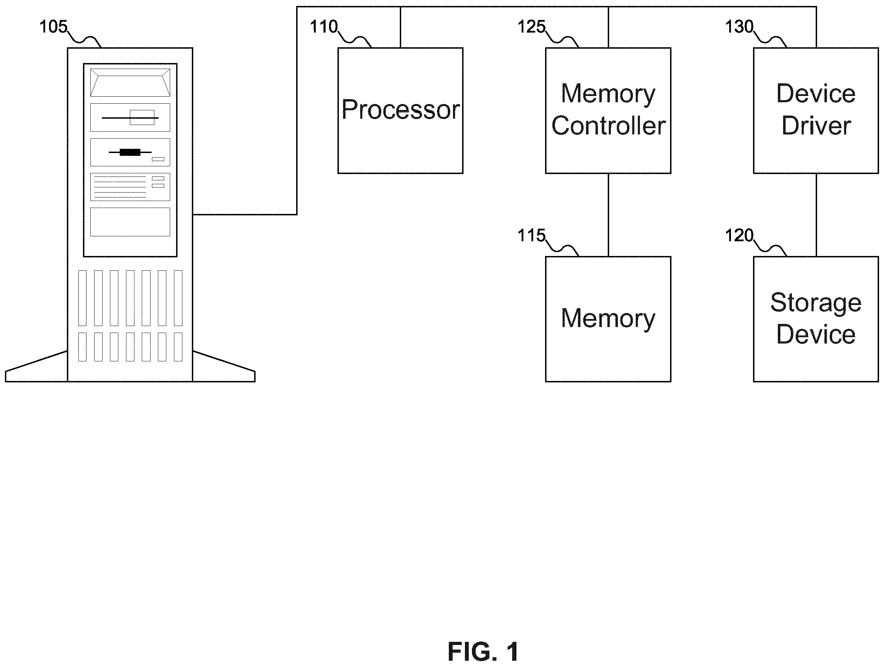

FIG. 1 shows a system including a storage device that may be used to extend memory, according to embodiments of the disclosure. In FIG. 1, machine 105, which may also be termed a host or a system, may include processor 110, memory 115, and storage device 120. Processor 110 may be any variety of processor. (Processor 110, along with the other components discussed below, are shown outside the machine for ease of illustration: embodiments of the disclosure may include these components within the machine.) While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM) etc. Memory 115 may be a volatile or non-volatile memory, as desired. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115. When storage device 120 is used to support applications reading or writing data via some sort of file system, storage device 120 may be accessed using device driver 130. While FIG. 1 shows one storage device 120, there may be any number of storage devices in machine 105. Storage device 120 may support any desired protocol or protocols, including, for example, the Non-Volatile Memory Express (NVMe) protocol. Different storage devices 120 may support different protocols and/or interfaces. For example, storage device 120 might support a cache coherent interconnect protocol, which may support both block-level protocol (or any other higher level of granularity) access and byte-level protocol (or any other lower level of granularity) access to data on storage device 120. An example of such a cache coherent interconnect protocol is the Compute Express Link (CXL) protocol, which supports accessing data in blocks using the CXL.io protocol and accessing data in bytes using the CXL.mem protocol. In this manner, data on a CXL storage device may be accessed as either block-level data (like an SSD) or byte-level data (such as a memory): the CXL storage device may be used to extend the system memory.

While FIG. 1 uses the generic term "storage device", embodiments of the disclosure may include any storage device formats that may benefit from the use of computational storage units, examples of which may include hard disk drives and Solid State Drives (SSDs). Any reference to "SSD" below should be understood to include such other embodiments of the disclosure. Further, different types of storage devices may be mixed. For example, one storage device 120 might be a hard disk drive, and another storage device 120 might be an SSD.

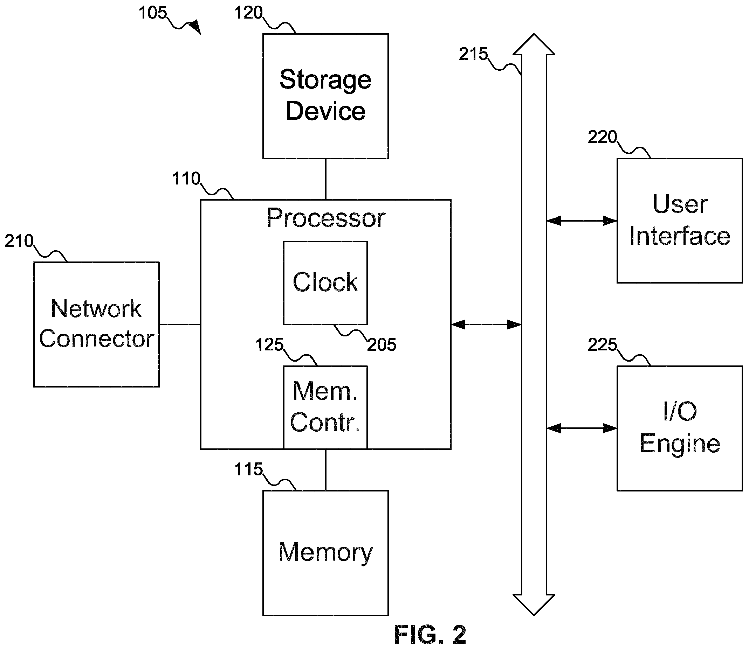

FIG. 2 shows details of machine 105 of FIG. 1, according to embodiments of the disclosure. In FIG. 2, typically, machine 105 includes one or more processors 110, which may include memory controllers 125 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage devices 120, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components.

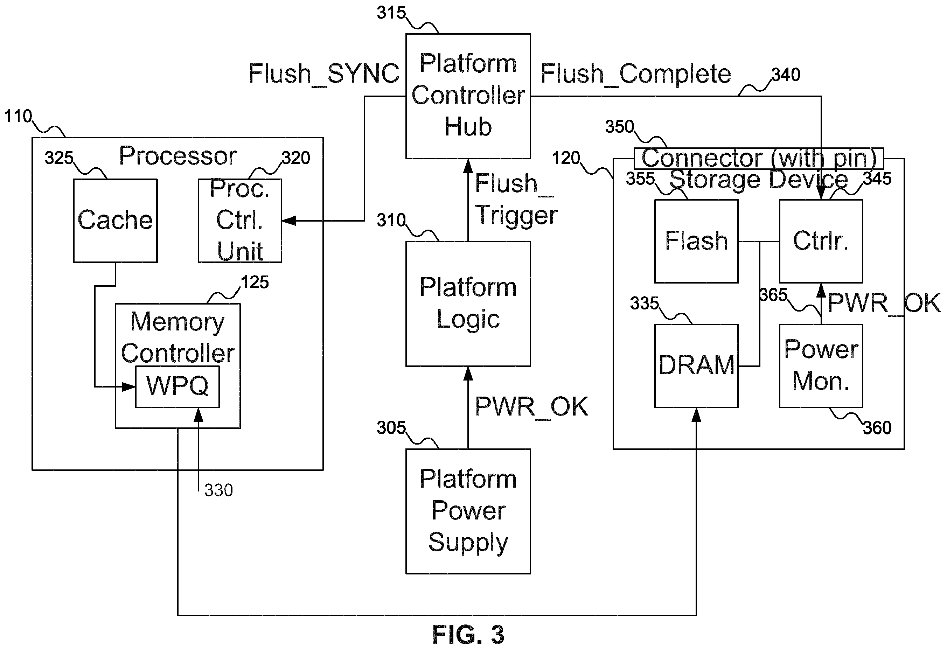

FIG. 3 shows communications including processor 110 of FIG. 1 and storage device 120 of FIG. 1 when power is interrupted, according to embodiments of the disclosure. In FIG. 3, platform power supply 305 may provide power to machine 105 of FIG. 1. In particular, platform power supply 305 may provide power to processor 110 (not shown in FIG. 3). Platform power supply 305 may also provide power to storage device 120, or storage device 120 may have its own independent power supply.

Platform logic 310 may monitor the power being supplied by platform power supply 305. If the power being supplied by platform power supply 305 stops completely (being either temporarily or indefinitely interrupted) or drops below a threshold level needed for the operation of processor 110 (and possibly other components, such as storage device 120), platform logic 310 may detect this fact and send a Flush_Trigger signal to platform controller hub 315. Platform controller hub 315 may then send a Flush_SYNC signal to processor 110 (more specifically, to a controller, such as processor control unit (PCU) 320) of processor 110. Processor 110 may then determine what data currently in cache 325 is dirty: that is, what data in cache 325 has been updated since it was loaded into cache 325. Once processor 110 has determined what data is dirty in cache 325, processor 110 may add requests to write pending queue (WPQ) 330, which may cause the dirty data to be written back to memory 115 of FIG. 1. WPQ 330 may be included in memory controller 125, which controls memory 115 of FIG. 1. In addition, either processor 110 or memory controller 125 may add requests to write data from memory 115 of FIG. 1 to write data currently in memory 110 of FIG. 1 (as opposed to cache 325) that is dirty to storage device 120. The requests in WPQ 330 may then be transferred to storage device 120: for example, into volatile storage 335 in storage device 120. In FIG. 3, volatile storage 335 is shown as DRAM, but embodiments of the disclosure may use any desired variety of volatile storage 335—for example, SRAM—or non-volatile storage.

Once processor 110 has completed the flush of data from cache 325, platform control hub 315 may send signal 340 (shown as a Flush_Complete signal, but embodiments of the disclosure may use any desired signal) to storage device 120 (more specifically, to controller 345 of storage device 120). Storage device 120 may receive this signal via connector 350. Controller 345 may then arrange to dump data from volatile storage 335 to non-volatile storage 355. In FIG. 3, non-volatile storage 355 is shown as flash storage, but embodiments of the disclosure may use any variety of non-volatile storage 355.

The embodiment of the disclosure shown in FIG. 3 includes volatile storage 335 as a mechanism to access data more quickly on storage device 120: data may be copied from non-volatile storage 355 into volatile storage 335, and then used as an extension of memory 115 of FIG. 1. But in some embodiments of the disclosure, where non-volatile storage 355 is accessed as an extension of memory 115 of FIG. 1 without using volatile storage 335, the data may be flushed directly to non-volatile storage 355.

Note that storage device 120 also includes power monitor 360. Power monitor 360 may independently monitor the power provided to storage device 120 (whether from platform power supply 305 or from an independent power supply). Should power monitor 360 determine that the power has been interrupted (either temporarily or indefinitely) or has dropped below a threshold level (which may be the same as or different from the threshold level used by platform logic 310), power monitor 360 may send signal 365 to controller 345 that power has been interrupted, so that controller 345 is aware of a problem with powering storage device 120. In this manner, storage device 120 may be prepared to act when power is interrupted, even before receiving signal 340 from platform controller hub 315.

FIG. 3 shows platform power supply 305, platform logic 310, and platform controller hub 315 as separate from each other and from both processor 110 and storage device 120, as each may have a separate function and may interact with components of machine 105 of FIG. 1 other than those shown in FIG. 3. For example, platform power supply 305 might provide power to both processor 110 and storage device 120 (as well as other components); platform logic 310 might be responsible for management of information other than the detection that power has been interrupted; and platform controller hub 315 might send signals to other components than processor control unit 320 and/or controller 345. But some embodiments of the disclosure may combine these components in any desired manner. For example, platform logic and platform controller hub 315 might be integrated into processor control unit 320. Embodiments of the disclosure are intended to cover all such variations.

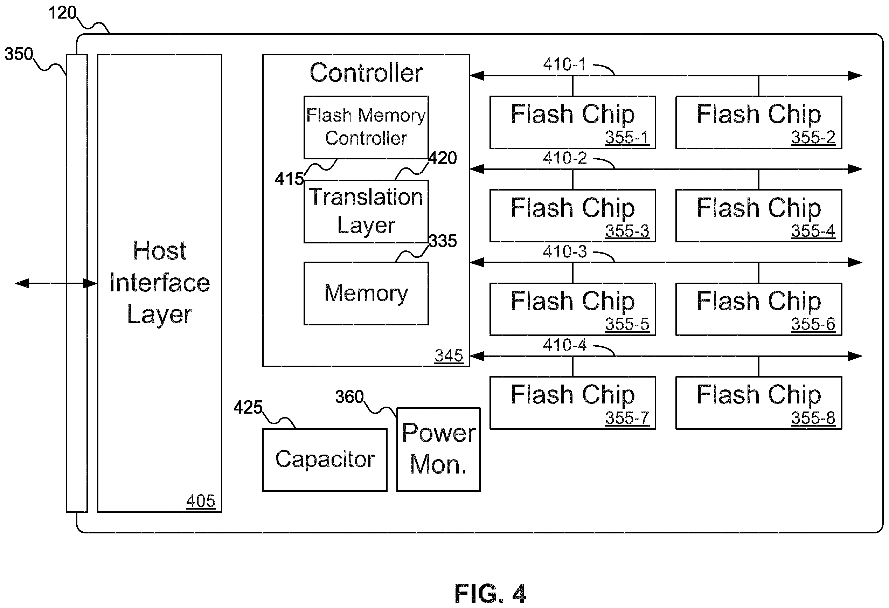

FIG. 4 shows details of storage device 120 of FIG. 1, according to embodiments of the disclosure. In FIG. 4, the implementation of storage device 120 is shown as for a Solid State Drive. In FIG. 4, storage device 120 may include connector 350, host interface layer (HIL) 405, controller 345, and various flash memory chips 355-1 through 355-8 (also termed "flash memory storage" or just "storage", and which may be referred to collectively as flash memory chips 355, non-volatile storage 355, or storage 355), which may be organized into various channels 410-1 through 410-4 (which may be referred to collectively as channels 410).

Connector 350 may be a physical connector included with storage device 120. Connector 350 may be used to connect storage device 120 to other components in machine 105 of FIG. 1, including, for example, processor 110 of FIG. 1. Processor 110 of FIG. 1 may thus communicate with storage device 120 via connector 350. Connector 350 may be any desired variety of connector, such as a Serial AT Attachment (SATA) connector, a Serial Attached Small Computer System Interface (SCSI) (SAS) connector, a small form factor (SFF) connector, a U.2 connector, an M.2 connector, or a half height, half length (HHHL) connector, among other possibilities. Connector 350 may be used to communicate with storage device 120 via any desired bus protocols, such as a Peripheral Component Interconnect Express (PCIe) bus, and may support any desired storage access protocol, such as the Non-Volatile Memory Express (NVMe) or NVMe over Fabrics (NVMeoF) protocols.

Connector 350 may include one or more pins to send and receive data. These pins may be male pins in the classic sense (an approximately cylindrical piece of metal projecting outward from the main part of connector 350, ignoring any material that may be used to align connector 350 with another piece of equipment). But connector 350 may also support other forms of connection that are not male pins. For example, connector 350 may include a female receiver for a male pin that may be part of another piece of equipment connected to connector 350). Or connector 350 may include a surface other than a cylinder (or the mate to a cylinder) appropriately designed to contact another piece of equipment, thereby establish a connection between a point of contact on connector 350 and another point of contact on the other equipment. The term "pin", as used herein, is intended to encompass all such mechanisms for contact between connector 350 and any equipment designed to connect to connector 350.

Of the pins on connector 350, various pins may have defined uses. But other pins may be marked as reserved for future use (RFU). RFU pins may be included to support future versions of equipment that may be connected using connector 350. Storage device 120 may receive signal 340 of FIG. 3 via one or more RFU pins of connector 350. Storage device 120 may also receive signal 340 of FIG. 3 via other pins of connector 350, as may be specified by the customer purchasing storage device 120.

Host interface layer 405 may manage communications between storage device 120 and other components (such as processor 110 of FIG. 1). That is, host interface layer 405 may send and receive data using any desired protocols across connector 350, and may translate between such protocols and formats/protocols used by controller 345. Host interface layer 405 may also manage communications (across connector 350) with devices that may be remote from storage device 120. That is, host interface layer 405 may manage communications with devices other than processor 110 of FIG. 1 (for example, an accelerator or network interface card, among other possibilities), and which may be local to or remote from machine 105 of FIG. 1: for example, over one or more network connections. These communications may include read requests to read data from storage device 120, write requests to write data to storage device 120, and delete requests to delete data from storage device 120, among other possibilities.

Host interface layer 405 may manage an interface across only a single port, or it may manage interfaces across multiple ports. That is, host interface layer 405 may communicate with a single connector 350, or may communicate with two or more connectors 350 (should storage device 120 include and support multiple connectors 350). In addition, if storage device 120 include multiple connectors 350, storage device 120 may include a separate host interface layer 405 for each connector 350. Embodiments of the inventive concept may also mix the possibilities (for example, an SSD with three connectors 350 might have one host interface layer to manage one connectors 350 and a second host interface layer to manage the other two connectors 350).

Controller 345 may manage the read and write operations, along with garbage collection and other operations, on flash memory chips 355 using flash memory controller 415. Controller 345 may also include translation layer 420 which may manage the mapping of logical addresses (such as logical block addresses (LBAs)) as used by machine 105 of FIG. 1 to physical addresses (such as physical block addresses (PBAs)) where the data is actually stored on storage device 120. By using translation layer 420, machine 105 of FIG. 1 does not need to be informed when data is moved from one physical address to another within storage device 120.

In FIG. 3, memory 335 is shown as separate from controller 345. But in some embodiments of the disclosure, controller 345 may also include memory 335. As discussed above, memory 335 may be a memory local to storage device 120 that may be used by controller 345 to perform various functions. Memory 335 may be any form of memory, such as SRAM or DRAM. In some embodiments of the disclosure, memory 335 may be a form of volatile storage; in other embodiments of the disclosure, memory 335 may be a form a non-volatile storage.

In some embodiments of the disclosure, storage device 120 may also include capacitor 425 and/or power monitor 360. Capacitor 425 may provide temporary power to memory 335, controller 345, and flash chips 355, to enable controller 345 to dump any data from memory 335 to flash chips 355, thereby preventing any data loss as a result of the power interruption. In some embodiments of the disclosure, capacitor 425 may take any form of backup power source: for example, a battery. The amount of power capacitor 425 may store may depend on the size of volatile storage 335 of FIG. 3 and how long storage device 120 of FIG. 1 may expect to wait to receive data flushed by processor 110 of FIG. 1 (and/or memory 115 of FIG. 1) to storage device 120 of FIG. 1.

Power monitor 360, as described above, may inform controller 345 if there has been a power interruption.

While FIG. 4 shows storage device 120 as including eight flash memory chips 355 organized into four channels 410, embodiments of the inventive concept may support any number of flash memory chips organized into any number of channels. Similarly, while FIG. 4 shows the structure of a SSD, other storage devices (for example, hard disk drives) may be implemented using a different structure from that shown in FIG. 4 to manage reading and writing data, but with similar potential benefits.

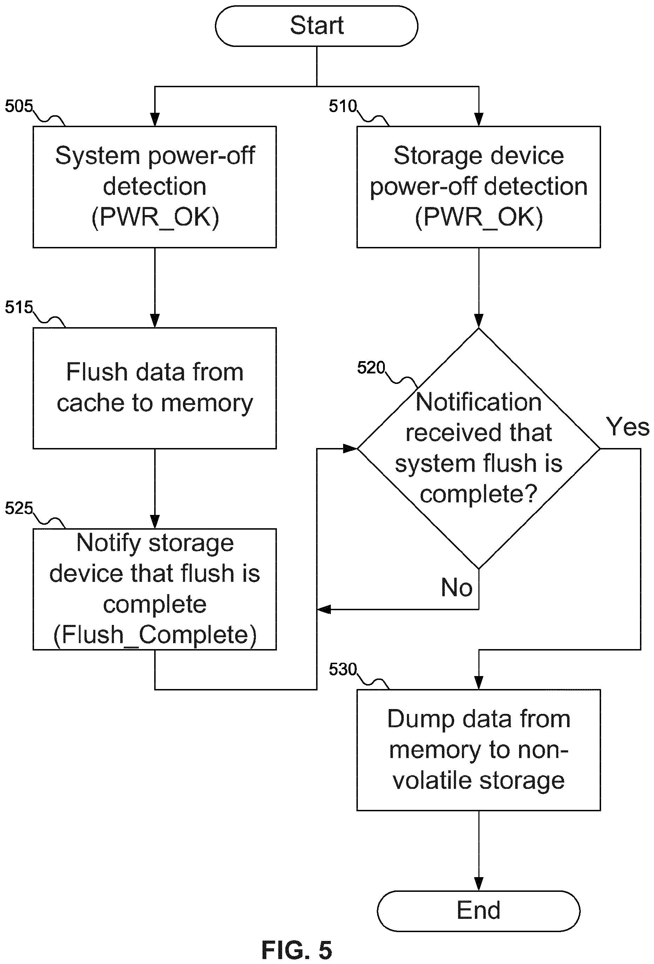

FIG. 5 shows a high level flow of operations involving processor 110 of FIG. 1 and storage device 120 of FIG. 1 when power is interrupted, according to embodiments of the disclosure. In FIG. 5, when power is interrupted, at block 505, processor 110 of FIG. 1 may detect the power interruption. Processor 110 of FIG. 1 may be informed of the power interruption (directly or indirectly) by platform logic 310 of FIG. 3.

In parallel with block 505, at block 510, storage device 120 of FIG. 1 may separately detect the power interruption. Storage device 120 of FIG. 1 may be informed of the power interruption by power monitor 360 of FIG. 3.

At operation 515, processor 110 of FIG. 1 may flush data from cache 325 of FIG. 3 to WPQ 330 of FIG. 3. Memory controller 125 may then send the data in WPQ 330 of FIG. 3 to volatile storage 335 of FIG. 3 in storage device 120 of FIG. 1.

At operation 520, storage device 120 of FIG. 1 may check to see if signal 340 of FIG. 3 has been received from platform controller hub 315 of FIG. 3. Until signal 340 of FIG. 3 is received at storage device 120 of FIG. 1 from platform controller hub 315 of FIG. 3, storage device 120 may wait.

When processor 110 has completed the flush of data from cache 325 of FIG. 3 to memory 115 of FIG. 1, at operation 525 platform controller hub 315 of FIG. 3 may send signal 340 of FIG. 3 to storage device 120 of FIG. 1. At that point, at operation 530, storage device 120 may dump data from volatile storage 335 to non-volatile storage 355. At this point, all data may have been transferred from volatile storage (be it in cache 325 of FIG. 3, memory 115 of FIG. 1, or volatile storage 335 of FIG. 3) to non-volatile storage (such as non-volatile storage 355 of FIG. 3), and data has been protected against the power interruption.

In the embodiments of the disclosure described above, storage device 120 of FIG. 1 waits for processor 110 of FIG. 1 to flush any data from cache 325 of FIG. 3 and/or main memory 115 of FIG. 1 to volatile storage 335 of FIG. 3 before dumping data from volatile storage 335 of FIG. 3 to non-volatile storage 355 of FIG. 3. The reason storage device 120 of FIG. 1 may wait is to ensure that the correct data is transferred to non-volatile storage 355 of FIG. 3. For example, consider the situation where volatile storage 335 of FIG. 3 includes a block of data, which was also copied into cache 325 of FIG. 3. If processor 110 of FIG. 1 has updated the data in cache 325 of FIG. 3, that updated data might not yet have been transferred to volatile storage 335 of FIG. 3. If storage device 120 of FIG. 1 dumps the data from volatile storage 335 of FIG. 3 to non-volatile storage 355 of FIG. 3 without waiting for signal 340 of FIG. 3, the data in volatile storage 335 of FIG. 3 might not have been updated with the data from cache 325 of FIG. 3 when the block from volatile storage 335 of FIG. 3 is dumped to non-volatile storage 355 of FIG. 3. By waiting to receive signal 340 of FIG. 3 before dumping data from volatile storage 335 of FIG. 3 to non-volatile storage 355 of FIG. 3, the updated data is ensured to be dumped to non-volatile storage 355 of FIG. 3.

But in some embodiments of the disclosure, storage device 120 of FIG. 1 may start dumping data from volatile storage 33 5 of FIG. 3 to non-volatile storage 355 of FIG. 3, even without receiving signal 340 of FIG. 3. After all, it is possible that not every block of data in volatile storage 335 of FIG. 3 has an updated version storage in cache 325 of FIG. 3. As long as storage device 120 of FIG. 1 knows what data was updated in cache 325 of FIG. 3, storage device 120 of FIG. 1 may start to dump data from volatile storage 335 of FIG. 3 to non-volatile storage 355 of FIG. 3 even without receiving signal 340 of FIG. 3. The only concern is making sure that the updated data is dumped as well at some point.

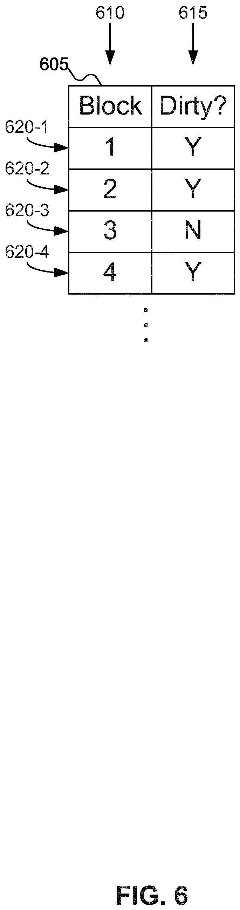

Cache 325 of FIG. 3 may already track what cache lines are clean and what cache lines are dirty. In this context, a clean cache line is a cache line that was copied from memory 115 of FIG. 1 (or from volatile storage 335 of FIG. 3) but has not be modified, whereas a dirty cache line is a cache line that was copied from memory 115 of FIG. 1 (or from volatile storage 335 of FIG. 3) and has be modified. FIG. 6 shows an example table that may track such information.

In FIG. 6, table 605 may store various information. Table 605 may store block identifiers 610 and dirty block indicators 615 (dirty block indicator 615 may also be referred to as indicator 615). Table 605 may also include entries, such as entries 620-1 through 620-4 (which may be referred to collectively as entries 620). Each entry may associate a block identifier 610 with a dirty block indicator 615. For example, entries 620-1, 620-2, and 620-4 may indicate that blocks 1, 2, and 4 are dirty, whereas entry 620-3 may indicate that block 3 is clean.

While FIG. 6 shows table 605 as including four entries 620, embodiments of the disclosure may include any number (zero or more) entries 620 in table 605. And while FIG. 6 shows table 6 as including block identifiers 610, in practice table 605 may include one entry 620 for each block that cache 325 of FIG. 3 (or memory 115 of FIG. 1 and/or volatile storage 335 of FIG. 3, depending on the implementation) has room for. Thus, block identifiers 610 may actually be implied by the number of entry 620, and may not need to be stored explicitly. Further, dirty block indicator may have only two possible values: yes or no, which may be variously represented by zero or one (with either zero or one representing either a yes or no value). In other words, table 605 may only need one bit per entry 620, which keeps table 605 as small as possible. Cache 325 of FIG. 3 may use table 605 to determine how to evict a cache line from cache 325 of FIG. 3: if the cache line being evicted is clean, it may be discarded without further ado, but if the cache line being evicted is dirty, the cache line may be flushed back to memory 115 of FIG. 1 and/or volatile storage 335 of FIG. 3 (and may later be written back to non-volatile storage 355 of FIG. 3).

Although the term "block" is used above, with entries 620 identifying whether a particular "block" is dirty or clean, embodiments of the disclosure may use entries 620 to track the status of individual cache lines in cache 325 as well. In such situations, memory 115 of FIG. 1 and/or volatile storage 335 of FIG. 5 may have separate tables 605 to track the clean/dirty status of blocks loaded into memory 115 of FIG. 1/volatile storage 335 of FIG. 3.

Given that cache 325 of FIG. 3 may store table 605 (or its equivalent), cache 325 of FIG. 3 may provide table 605 to storage device 120 of FIG. 1 as part of flushing data from cache 325 of FIG. 3 to volatile storage 335 of FIG. 3. Storage device 120 of FIG. 1 may then use table 605 to determine which data was dirty, and may perform a second dump of those blocks from volatile storage 335 of FIG. 3 to non-volatile storage 355 of FIG. 3: clean blocks may be ignored, since the data in those blocks would have been dumped as part of the earlier dump from volatile storage 335 of FIG. 3 to non-volatile storage 355 of FIG. 3. Note that in such embodiments of the disclosure, storage device 120 of FIG. 1 may dump data from volatile storage 335 of FIG. 3 to non-volatile storage 355 of FIG. 3 twice: once when performing the initial dump of data (and which might miss data being flushed from cache 325 of FIG. 3), and once again to dump data that table 605 of FIG. 6 indicates is dirty.

In some embodiments of the disclosure, a cache line in cache 325 of FIG. 3 may be smaller than a block in storage device 120 of FIG. 1. For example, cache lines are typically 16-256 bytes in size, whereas a block might be 512 kilobytes (KB) in size. In such embodiments of the disclosure, the cache line being flushed to memory 115 of FIG. 1 and/or volatile storage 335 of FIG. 3 may be mapped to a block. This mapping may be accomplished by, for example, considering the address in volatile storage 335 of FIG. 3 from which the cache line was copied. Knowing the address from which the cache line was copied may identify the particular block that contains the data, so that the corresponding block in memory 115 of FIG. 1 and/or volatile storage 335 of FIG. 3 may be marked as dirty in table 605 for the blocks.

In addition, in some embodiments of the disclosure, the form of the request sent by processor 110 of FIG. 1 may indicate whether the data is expected to be modified or not. For example, the request from processor 110 of FIG. 1 may indicate whether the data to be cached by processor 110 of FIG. 1 is in a modified state, an exclusive state, a shared state, or an invalid state. If the data is in a modified state, processor 110 of FIG. 1 may update the data at some point, in which case the data as stored in storage device 120 of FIG. 1 may be out-of-date. If the data is in an exclusive state, then the data in storage device 120 of FIG. 1 is expected to remain current even though processor 110 of FIG. 1 may be caching the data. If the data is in a shared state, then caches other than cache 325 of FIG. 3 may cache the data, but the data in storage device 120 of FIG. 1 is expected to remain current. Finally, if the data is in an invalid state, no processor 110 of FIG. 1 may be caching the data (and the data in storage device 120 of FIG. 1 is current). If the request from processor 110 of FIG. 1 includes such state information, then storage device 120 of FIG. 1 may build its own table 605, without waiting for cache 325 of FIG. 3 to share its table indicating which cache lines are dirty.

In all of the embodiments described above, storage device 120 of FIG. 1 may be local to processor 110 of FIG. 1. That is, processor 110 of FIG. 1 and storage device 120 of FIG. 1 may be housed within the same chassis. In such situations, it may be expected that processor 110 of FIG. 1 and storage device 120 of FIG. 1 may share a power source, and that if one of processor 110 of FIG. 1 and storage device 120 of FIG. 1 loses power, it is likely that the other component may also lose power. Using a signal such as signal 340 of FIG. 3 is an efficient mechanism for alerting storage device 120 of FIG. 1 that processor 120 of FIG. 1 has completed its flush of cache 325 of FIG. 3.

But in some embodiments of the disclosure, processor 110 of FIG. 1 may be remote from storage device 120 of FIG. 1. That is, processor 110 of FIG. 1 may be located in another machine 105 of FIG. 1, and may communicate with storage device 120 of FIG. 1 across a network. In such embodiments of the disclosure, it might not be possible for processor 110 of FIG. 1 (or platform controller hub 315 of FIG. 3) to send signal 340 of FIG. 3 to storage device 120. In such situations, other mechanisms may be used to communicate with storage device 120 of FIG. 1. For example, some cache coherent interconnect protocols may support a software method for communicating, using messages. One such message may be a Global Persistent Flush (GPF) message. A GPF message may be sent from processor 110 to storage device 120 of FIG. 1 upon completion of the flush of processor cache 325 of FIG. 3.

There are various benefits to using signal 340 of FIG. 3 versus a GPF message. Signal 340 of FIG. 3 may be faster than a GPF message. Signal 340 of FIG. 3 may also require less power than a GPF message. But a GPF message may be more generic, and may be used in situations where signal 340 of FIG. 3 might not be an option (for example, if processor 110 of FIG. 1 is remote from storage device 120 of FIG. 1).

As discussed above, if processor 110 of FIG. 1 and storage device 120 of FIG. 1 are remote from each other, then only one component might experience a power interruption. If that component is processor 110 of FIG. 1, then storage device 120 of FIG. 1 does not have any power issue to worry about, and can dump data from volatile storage 335 of FIG. 3 to non-volatile storage 355 of FIG. 3 when convenient. But what if storage device 120 of FIG. 1 is the component experiencing the power interruption? In that case, storage device 120 of FIG. 1 may send a message to processor 110 of FIG. 1 that it is experiencing a power interruption, and that processor 110 of FIG. 1 should flush data from cache 325 of FIG. 3 and/or memory 115 of FIG. 1 to storage device 120 of FIG. 1, so that storage device 120 of FIG. 1 may dump data to non-volatile storage 355 of FIG. 3 as soon as possible. Processor 110 of FIG. 1 may then act as though it had received the Flush_SYNC signal from platform controller hub 315 of FIG. 3, after which processor 110 of FIG. 1 may send a GPF message to storage device 120 of FIG. 1, informing storage device 120 of FIG. 1 that the flush is complete.

Finally, note that even if processor 110 of FIG. 1 and storage device 120 of FIG. 1 are local (that is, both are in machine 105 of FIG. 1), a GPF message may be used rather than signal 340 of FIG. 3.

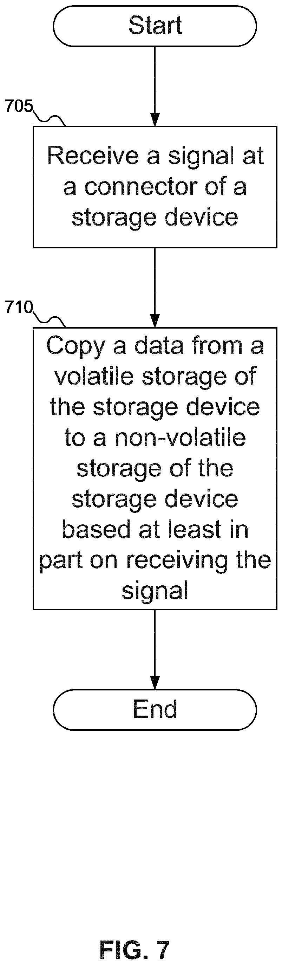

FIG. 7 shows a flowchart of an example procedure for storage device 120 of FIG. 1 to undertake when power is interrupted, according to embodiments of the disclosure. In FIG. 7, at block 705, storage device 120 of FIG. 1 may receive signal 340 of FIG. 3 or a GPF message. This signal 340 of FIG. 3 or GPF message may originate at processor 110 of FIG. 1 or at another component, such as platform controller hub 315 of FIG. 3. At block 710, storage device 120 of FIG. 1 may copy a data from volatile storage 335 of FIG. 3 to non-volatile storage 355 of FIG. 3 in response to receiving signal 340 of FIG. 3 or the GPF message.

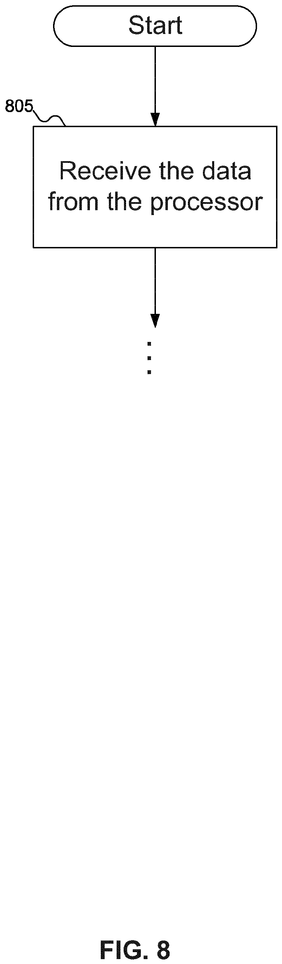

FIG. 8 shows a flowchart of an example procedure for additional operations storage device 120 of FIG. 1 may undertake when power is interrupted, according to embodiments of the disclosure. In FIG. 8, at block 805, storage device 120 of FIG. 1 may receive data flushed from cache 325 of FIG. 3 and/or memory 115 of FIG. 1. This data may be stored in volatile storage 335 of FIG. 3. Once processor 110 of FIG. 1 has flushed cache 325 of FIG. 3, signal 340 of FIG. 3 or the GPF message may be sent to storage device 120 of FIG. 1 as described above.

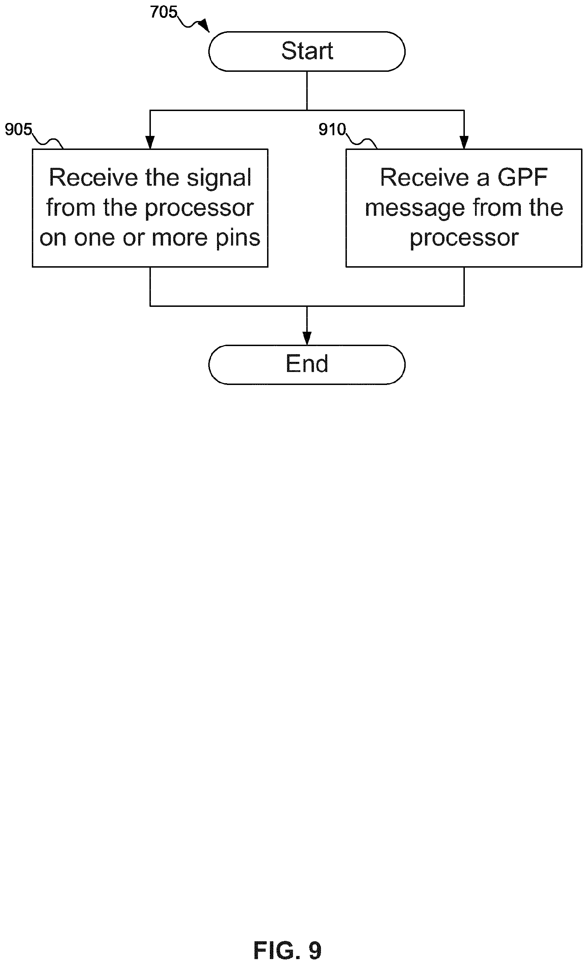

FIG. 9 shows a flowchart of an example procedure for storage device 120 of FIG. 1 to receive signal 340 of FIG. 3, according to embodiments of the disclosure. In FIG. 9, at block 905, storage device 120 of FIG. 1 may receive signal 340 of FIG. 3 on one or more pins of connector 350 of FIG. 3. Alternatively, at block 910, storage device may receive a GPF message, possibly via connector 350 of FIG. 3.

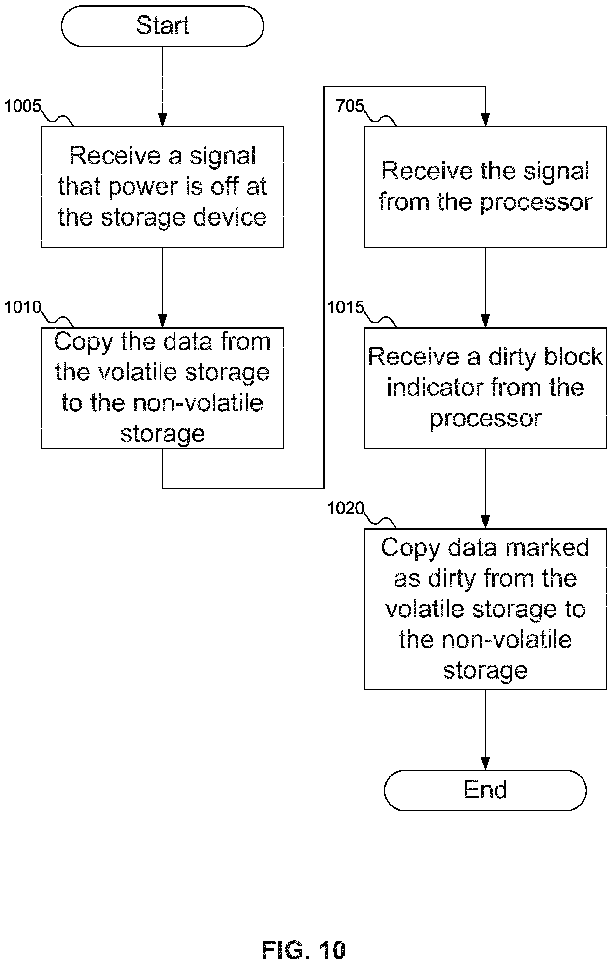

FIG. 10 shows a flowchart of another example procedure for storage device 120 of FIG. 1 to undertake when power is interrupted, according to embodiments of the disclosure. In FIG. 10, at block 1005, storage device 120 of FIG. 1 may receive a signal, such as signal 365 of FIG. 3 from power monitor 360 of FIG. 3 that power has been interrupted. At block 1010, storage device 120 of FIG. 1 may copy data from volatile storage 335 of FIG. 3 to non-volatile storage 355 of FIG. 3. At block 705, storage device 120 of FIG. 3 may receive signal 340 of FIG. 3 or a GPF message from processor 110 of FIG. 1 or at another component, such as platform controller hub 315 of FIG. 3. At block 1015, storage device may receive dirty block indicator 610 of FIG. 6, indicating which cache lines that were stored in cache 325 of FIG. 3 and/or memory 115 of FIG. 1 and were flushed to storage device 120 of FIG. 1 are dirty. Finally, at block 1020, storage device 120 of FIG. 1 may copy data again from volatile storage 335 of FIG. 3 to non-volatile storage 355 of FIG. 3, but may limit the copy to the blocks that are marked as dirty according to table 605 of FIG. 6.

In FIGs. 7-10, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Embodiments of the disclosure may have a storage device include a volatile storage and a non-volatile storage. In the event of a power interruption, the storage device may wait to receive a signal from a processor in the host, indicating that the processor has flushed any data from its cache and/or the host memory to the storage device, at which point the storage device may dump data from its volatile storage to its non-volatile storage. Embodiments of the disclosure offer a technical advantage in ensuring that any data that was stored in the host memory or cached by the processor is dumped correctly to the non-volatile storage.

When using Dynamic Random Access Memory (DRAM) and a flash cache as a persistent memory, it is necessary to guarantee the data persistency. Existing persistent memories are located on the same system, and when the system power is turned off, the CPU completes the cache flush through the data flush operation (such as Asynchronous DRAM Refresh (ADR) or extended ADR (eADR)) in the system, notifies the flush completion to the persistent memory (Flush_complete), and the persistent memory moves all data (in cache and in the Write Pending Queue (WPQ)) to permanent areas as soon as receiving the specific signal, such as SAVE# Pin (defined in the Joint Electron Device Engineering Council (JEDEC)). However, in order to provide the persistence for the storage device, the consistency of the data must be guaranteed.

Systems and storage devices may detect power status on their own respectively, so when power is turned off, the system and storage device move the data that needs to be guaranteed to the permanent area as soon as they detect power-off respectively. In case that the storage device is used as a persistent memory, the data consistency (Cache and WPQ data on the system) between the system and the persistent storage device is not guaranteed. In order to use the storage device as a persistent memory, the storage device may have to guarantee the data persistency between them. For data consistency, the storage device may have to move the data to the permanent areas after completing the flush operation(such as eADR/ADR) that means the cache and WPQ data of the system are flushed to the storage device used as a persistent memory during power-off.

Embodiments of the disclosure use the storage device 120 as persistent memory. First, the storage device is notified that the flush between the system and the storage device used as the persistent memory is completed, and second, the storage device moves the data to the permanent area after checking that the flush is completed from the system when power-off occurs.

Embodiments of the disclosure may include a system that has a data flush operation, such as an eADR/ADR, to flush the data to storage device 120 through a general storage interface, such as the Peripheral Component Interconnect Express (PCIe) protocol. The system may have a logic, such as platform logic, and a platform control chip, such as a Platform Controller Hub (PCH), for detecting the power-off and notifying the data flush.

A storage device 120 may include some volatile memory, such as DRAM, and some non-volatile memory, such as flash. The storage device may also include a controller to control the volatile and non-volatile memories, and a power monitoring logic to detect the power state.

As an interface to notify flush completion between system and storage device, the Reserved Future Use (RFU) Pin, as defined as in PCIe of the Enterprise and Data Center Standard Form Factor (EDSFF) may be used. Alternatively, user-defined pins and/or predefined pins in other form factors such as U.2 and HHHL may be used.

Embodiments of the disclosure enable a storage device 120 to guarantee persistency both used as a memory and as a storage. When the storage device is used as a memory, the device may have an interface, such as the Compute Express Link (CXL) protocol, Cache Coherent Interconnect for Accelerators (CCIX), or Gen-Z; when the storage device is used as a storage, the storage device may have an interface, such as the Non-Volatile Memory Express (NVMe) protocol. The storage device may have a memory interface, a storage interface, or both interfaces at the same time. If the device is used as a memory, a mechanism for guaranteeing the persistency may involve the central processing unit's (CPU's) persistency mechanism.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

The foregoing illustrative embodiments are not to be construed as limiting the disclosure thereof. Although a few embodiments have been described, those skilled in the art will readily appreciate that many modifications are possible to those embodiments without materially departing from the novel teachings and advantages of the present disclosure. Accordingly, all such modifications are intended to be included within the scope of this disclosure as defined in the claims.

Embodiments of the disclosure may extend to the following statements, without limitation:
Statement 1. An embodiment of the disclosure includes a storage device, comprising:
   a volatile storage;
   a non-volatile storage;
   a backup power source configured to provide backup power to the volatile storage;
   a connector to connect the storage device to a processor; and
   a controller configured to use the volatile storage as a cache for the non-volatile storage,
   wherein the controller is configured to copy a data from the volatile storage to the non-volatile storage based at least in part on receiving a signal.
Statement 2. An embodiment of the disclosure includes the storage device according to statement 1, wherein:
   the storage device includes a Solid State Drive (SSD);
   the volatile storage includes a Dynamic Random Access Memory (DRAM); and
   the non-volatile storage includes a flash storage.
Statement 3. An embodiment of the disclosure includes the storage device according to statement 1, wherein the connector includes a Serial AT Attachment (SATA) connector, a Serial Attached Small Computer System Interface (SCSI) (SAS) connector, a small form factor (SFF) connector, a U.2 connector, an M.2 connector, or a half height, half length (HHHL) connector.
Statement 4. An embodiment of the disclosure includes the storage device according to statement 1, wherein:
   the connector includes a pin; and
   the controller is further configured to copy the data from the volatile storage to the non-volatile storage based at least in part on receiving the signal) over the pin.
Statement 5. An embodiment of the disclosure includes the storage device according to statement 4, wherein the pin is a reserved for future use (RFU) pin or a customer-specified pin.
Statement 6. An embodiment of the disclosure includes the storage device according to statement 4, wherein:
   the connector includes a second pin; and
   the controller is configured to copy the data from the volatile storage to the non-volatile storage based at least in part on receiving the signal over the pin and the second pin.
Statement 7. An embodiment of the disclosure includes the storage device according to statement 1, wherein the signal includes a Global Persistent Flush (GPF) message.
Statement 8. An embodiment of the disclosure includes the storage device according to statement 7, wherein the storage device is remote from the component that sends the GPF message.
Statement 9. An embodiment of the disclosure includes the storage device according to statement 1, wherein the controller is configured to copy the data from the volatile storage to the non-volatile storage based at least in part on receiving the signal from one of a processor or a platform controller hub.
Statement 10. An embodiment of the disclosure includes the storage device according to statement 1, wherein the controller is further configured to copy a second data from the volatile storage to the non-volatile storage based at least in part on an interruption of a primary power for the storage device.
Statement 11. An embodiment of the disclosure includes the storage device according to statement 10, wherein the storage device further comprises a power monitor configured to send a second signal to the controller that the primary power for the storage device is interrupted.
Statement 12. An embodiment of the disclosure includes the storage device according to statement 10, wherein the controller is configured to copy the data from the volatile storage to the non-volatile storage based at least in part on receiving the signal and a dirty block indicator for the data.
Statement 13. An embodiment of the disclosure includes the storage device according to statement 10, wherein the controller is configured to copy a second data from the volatile storage to the non-volatile storage based at least in part on an interruption of a primary power for the storage device before receiving the signal.
Statement 14. An embodiment of the disclosure includes the storage device according to statement 1, wherein the controller is configured to receive the signal based at least in part on a processor performing a data flush operation.
Statement 15. An embodiment of the disclosure includes the storage device according to statement 14, wherein the data flush operation includes copying the data from a cache of the processor to the volatile storage of the storage device.
Statement 16. An embodiment of the disclosure includes the storage device according to statement 1, wherein the controller is configured to copy the data from the volatile storage to the non-volatile storage after receiving the signal.
Statement 17. An embodiment of the disclosure includes a method, comprising:
   receiving a signal at a connector of a storage device; and
   copying a data from a volatile storage of the storage device to a non-volatile storage of the storage device based at least in part on receiving the signal.
Statement 18. An embodiment of the disclosure includes the method according to statement 17, wherein:
   the storage device includes a Solid State Drive (SSD);
   the volatile storage includes a Dynamic Random Access Memory (DRAM); and
   the non-volatile storage includes a flash storage.
Statement 19. An embodiment of the disclosure includes the method according to statement 17, wherein the connector is a Serial AT Attachment (SATA) connector, a Serial Attached Small Computer System Interface (SCSI) (SAS) connector, a small form factor (SFF) connector, a U.2 connector, an M.2 connector, or a half height, half length (HHHL) connector.
Statement 20. An embodiment of the disclosure includes the method according to statement 17, wherein:
   receiving the signal at the connector of the storage device includes receiving the signal at the connector of the storage device from one of a processor or a platform controller hub.
Statement 21. An embodiment of the disclosure includes the method according to statement 17, wherein receiving the signal at the connector of the storage device includes receiving the signal at a pin of the connector of the storage device.
Statement 22. An embodiment of the disclosure includes the method according to statement 21, wherein the pin is a reserved for future use (RFU) pin or a customer-specified pin.
Statement 23. An embodiment of the disclosure includes the method according to statement 21, wherein receiving the signal at the pin of the connector of the storage device includes receiving the signal at the pin and a second pin of the connector of the storage device.
Statement 24. An embodiment of the disclosure includes the method according to statement 17, wherein receiving the signal at the connector of the storage device includes receiving a Global Persistent Flush (GPF) message at the connector of the storage device.
Statement 25. An embodiment of the disclosure includes the method according to statement 24, wherein the storage device is remote from a component that sends the GPF message.
Statement 26. An embodiment of the disclosure includes the method according to statement 17, further comprising copying the data from the volatile storage of the storage device to the non-volatile storage of the storage device based at least in part on an interruption of a primary power for the storage device.
Statement 27. An embodiment of the disclosure includes the method according to statement 26, further comprising receiving a second signal from a power monitor of the storage device that the primary power for the storage device is interrupted.
Statement 28. An embodiment of the disclosure includes the method according to statement 26, wherein:
   receiving the signal at the connector of the storage device includes receiving a dirty block indicator for the data; and
   copying the data from the volatile storage of the storage device to the non-volatile storage of the storage device includes copying the data from the volatile storage of the storage device to the non-volatile storage of the storage device based at least in part on receiving the signal and the dirty block indicator.
Statement 29. An embodiment of the disclosure includes the method according to statement 26, wherein copying the data from the volatile storage of the storage device to the non-volatile storage of the storage device based at least in part on the interruption of the primary power for the storage device includes copying the data from the volatile storage of the storage device to the non-volatile storage of the storage device based at least in part on the interruption of the primary power for the storage device and before receiving the signal.
Statement 30. An embodiment of the disclosure includes the method according to statement 17, wherein receiving the signal at the connector of the storage device includes receiving the signal at the connector of the storage device that a processor has performed a data flush operation.
Statement 31. An embodiment of the disclosure includes the method according to statement 30, further comprising receiving the data from the processor into the volatile storage as part of the data flush operation.
Statement 32. An embodiment of the disclosure includes the method according to statement 17, wherein copying the data from the volatile storage of the storage device to the non-volatile storage of the storage device based at least in part on receiving the signal includes copying the data from the volatile storage of the storage device to the non-volatile storage of the storage device after receiving the signal.
Statement 33. An embodiment of the disclosure includes an article, comprising a non-transitory storage medium, the non-transitory storage medium having stored thereon instructions that, when executed by a machine, result in, comprising:
   receiving a signal at a connector of a storage device; and
   copying a data from a volatile storage of the storage device to a non-volatile storage of the storage device based at least in part on receiving the signal.
Statement 34. An embodiment of the disclosure includes the article according to statement 33, wherein:
   the storage device includes a Solid State Drive (SSD);
   the volatile storage includes a Dynamic Random Access Memory (DRAM); and
   the non-volatile storage includes a flash storage.
Statement 35. An embodiment of the disclosure includes the article according to statement 33, wherein the connector is a Serial AT Attachment (SATA) connector, a Serial Attached Small Computer System Interface (SCSI) (SAS) connector, a small form factor (SFF) connector, a U.2 connector, an M.2 connector, or a half height, half length (HHHL) connector.
Statement 36. An embodiment of the disclosure includes the article according to statement 33, wherein:
   receiving the signal at the connector of the storage device includes receiving the signal at the connector of the storage device from one of a processor or a platform controller hub.
Statement 37. An embodiment of the disclosure includes the article according to statement 33, wherein receiving the signal at the connector of the storage device includes receiving the signal at a pin of the connector of the storage device.
Statement 38. An embodiment of the disclosure includes the article according to statement 37, wherein the pin is a reserved for future use (RFU) pin or a customer-specified pin.
Statement 39. An embodiment of the disclosure includes the article according to statement 37, wherein receiving the signal at the pin of the connector of the storage device includes receiving the signal at the pin and a second pin of the connector of the storage device.
Statement 40. An embodiment of the disclosure includes the article according to statement 33, wherein receiving the signal at the connector of the storage device includes receiving a Global Persistent Flush (GPF) message at the connector of the storage device.
Statement 41. An embodiment of the disclosure includes the article according to statement 40, wherein the storage device is remote from a component that sends the GPF message.
Statement 42. An embodiment of the disclosure includes the article according to statement 33, the non-transitory storage medium having stored thereon further instructions that, when executed by the machine, result in copying the data from the volatile storage of the storage device to the non-volatile storage of the storage device based at least in part on an interruption of a primary power for the storage device.
Statement 43. An embodiment of the disclosure includes the article according to statement 42, the non-transitory storage medium having stored thereon further instructions that, when executed by the machine, result in receiving a second signal from a power monitor of the storage device that the primary power for the storage device is interrupted.
Statement 44. An embodiment of the disclosure includes the article according to statement 42, wherein:
   receiving the signal at the connector of the storage device includes receiving a dirty block indicator for the data; and
   copying the data from the volatile storage of the storage device to the non-volatile storage of the storage device includes copying the data from the volatile storage of the storage device to the non-volatile storage of the storage device based at least in part on receiving the signal and the dirty block indicator.
Statement 45. An embodiment of the disclosure includes the article according to statement 42, wherein copying the data from the volatile storage of the storage device to the non-volatile storage of the storage device based at least in part on the interruption of the primary power for the storage device includes copying the data from the volatile storage of the storage device to the non-volatile storage of the storage device based at least in part on the interruption of the primary power for the storage device and before receiving the signal.
Statement 46. An embodiment of the disclosure includes the article according to statement 33, wherein receiving the signal at the connector of the storage device includes receiving the signal at the connector of the storage device that a processor has performed a data flush operation.
Statement 47. An embodiment of the disclosure includes the article according to statement 46, the non-transitory storage medium having stored thereon further instructions that, when executed by the machine, result in receiving the data from the processor into the volatile storage as part of the data flush operation.
Statement 48. An embodiment of the disclosure includes the article according to statement 33, wherein copying the data from the volatile storage of the storage device to the non-volatile storage of the storage device based at least in part on receiving the signal includes copying the data from the volatile storage of the storage device to the non-volatile storage of the storage device after receiving the signal.

Consequently, in view of the wide variety of permutations to the embodiments described herein, this detailed description and accompanying material is intended to be illustrative only, and should not be taken as limiting the scope of the disclosure. What is claimed as the disclosure, therefore, is all such modifications as may come within the scope of the following claims.

## Claims

1. A storage device, comprising:
a volatile storage;
a non-volatile storage;
a backup power source configured to provide backup power to the volatile storage;
a connector to connect the storage device to a processor; and
a controller configured to use the volatile storage as a cache for the non-volatile storage,
wherein the controller is configured to copy a data from the volatile storage to the non-volatile storage based at least in part on receiving a signal.

2. The storage device according to claim 1, wherein:
the connector includes a pin; and
the controller is further configured to copy the data from the volatile storage to the non-volatile storage based at least in part on receiving the signal) over the pin.

3. The storage device according to claim 1 or 2, wherein the signal includes a Global Persistent Flush, GPF, message.

4. The storage device according to claim 3, wherein the storage device is remote from the component that sends the GPF message.

5. The storage device according to any one of claims 1 to 4, wherein the controller is configured to copy the data from the volatile storage to the non-volatile storage based at least in part on receiving the signal from one of a processor or a platform controller hub.

6. The storage device according to any one of claims 1 to 5, wherein the controller is further configured to copy a second data from the volatile storage to the non-volatile storage based at least in part on a change of a primary power for the storage device.

7. The storage device according to claim 6, wherein the storage device further comprises a power monitor configured to send a second signal to the controller that the primary power for the storage device is changed.

8. The storage device according to claim 6 or 7, wherein the controller is configured to copy the data from the volatile storage to the non-volatile storage based at least in part on receiving the signal and an indicator for the data.

9. The storage device according to any one of claims 1 to 8, wherein the controller is configured to receive the signal based at least in part on a processor performing a data flush operation.

10. The storage device according to claim 9, wherein the data flush operation includes copying the data from a cache of the processor to the volatile storage of the storage device.

11. A method, comprising:
receiving a signal at a connector of a storage device; and
copying a data from a volatile storage of the storage device to a non-volatile storage of the storage device based at least in part on receiving the signal.

12. The method according to claim 11, wherein:
receiving the signal at the connector of the storage device includes receiving the signal at the connector of the storage device from one of a processor or a platform controller hub.

13. The method according to claim 11 or 12, wherein receiving the signal at the connector of the storage device includes receiving the signal at a pin of the connector of the storage device.

14. The method according to any one of claims 11 to 13, wherein receiving the signal at the connector of the storage device includes receiving a Global Persistent Flush, GPF, message at the connector of the storage device.

15. The method according to claim 14, wherein the storage device is remote from a component that sends the GPF message.
